# EUROPEAN PATENT SPECIFICATION

(11) **EP 4 290 177 B1**
(45) Date of publication and mention of the grant of the patent: **11.11.2026**
(21) Application number: 22178327.7
(22) Date of filing: 10.06.2022
(51) Int. Cl.: G01C 19/5776, G01C 21/10, G01C 21/16, G01P 15/02

(54) **INERTIAL MEASUREMENT UNIT AND METHOD FOR OPERATING A MEASUREMENT UNIT**
TRÄGHEITSMESSEINHEIT UND VERFAHREN ZUM BETREIBEN EINER MESSEINHEIT
UNITÉ DE MESURE INERTIELLE ET PROCÉDÉ PERMETTANT DE FAIRE FONCTIONNER UNE UNITÉ DE MESURE

(43) Date of publication of application: 13.12.2023
(73) Proprietor: Pepperl+Fuchs SE, 68307 Mannheim (DE)
(72) Inventor: Speck, Achim, 78234 Engen-Biesendorf (DE)
(74) Representative: Banse & Steglich Patentanwälte PartmbB

(56) References cited:
- DE-A1- 102007 055 639
- US-A1- 2018 206 099
- REHBINDER H ET AL: "Drift-Free attitude estimation for accelerated rigid bodies", PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, vol. 4, 21 May 2001 (2001-05-21), pages 4244 - 4249, XP010550800, ISBN: 978-0-7803-6576-6, DOI: 10.1109/ROBOT.2001.933281
- JAMES CALUSDIAN ET AL: "Adaptive-gain complementary filter of inertial and magnetic data for orientation estimation", ROBOTICS AND AUTOMATION (ICRA), 2011 IEEE INTERNATIONAL CONFERENCE ON, IEEE, 9 May 2011 (2011-05-09), pages 1916 - 1922, XP032033820, ISBN: 978-1-61284-386-5, DOI: 10.1109/ICRA.2011.5979957
- SABATINI A M: "Quaternion-based extended Kalman filter for determining orientation by inertial and magnetic sensing", IEEE TRANSACTIONS ON BIOMEDICAL ENGINEERING, IEEE, USA, vol. 53, no. 7, 1 July 2006 (2006-07-01), pages 1346 - 1356, XP002522559, ISSN: 0018-9294, DOI: 10.1109/TBME.2006.875664
- ODRY ÁKOS ET AL: "A Novel Fuzzy-Adaptive Extended Kalman Filter for Real-Time Attitude Estimation of Mobile Robots", SENSORS, vol. 20, no. 3, 1 February 2020 (2020-02-01), CH, pages 1 - 29, XP093223092, ISSN: 1424-8220, DOI: 10.3390/s20030803

## Description

### Technical field

The present invention relates to inertial measurement units (IMU) for measuring inertial (linear(translational) acceleration), angular velocity, and/or angular acceleration in one or more dimensions. The present invention particularly relates to inertial measurement units having a preprocessing of raw sensor signals including data cleaning, filtering, and the like.

### Technical background

IMUs are applied in various applications such as for tilting sensors, navigation purposes in mobile devices, and the like. Particularly, IMUs are commonly used in guidance systems utilized in vehicles providing an independent and alternative source for navigation.

A standard IMU may be implemented as a MEMS-based system and does usually include a sensor unit based on spring-biased masses which are capacitively coupled to provide a variable capacitance output depending on a motion-induced force, such as an inertial force or centripetal force, being exerted thereon. The variable capacitance is conventionally measured to provide raw sensor data in form of e.g. a voltage signal.

Usually, the sensor signals provided by the sensor unit are raw sensor signals. As the sensing of the sensor unit is sensitive over a wide range of physical conditions, such as temperature, ambient pressure, mechanical stress, magnetic/electromagnetic fields, or the like, the raw sensor signals have to be preprocessed to obtain clean sensor signals, which can be used for downstream applications. Therefore, in close proximity, the compensation and/or filtering unit is coupled with the sensor unit to allow calibration, re-calibration, and/or filtering of the raw sensor signals. As preprocessing may conventionally include a compensation of the raw sensor signals, which allows for correcting misalignment of the sensing unit, and for applying a scaling factor and an offset for correcting a sensing mismatch. Such compensation may be defined by a compensation table to store the relevant compensation parameters.

Furthermore, preprocessing may include filtering of the raw sensor signals, particularly to reduce or eliminate dynamic influences, such as from high-frequency vibrations or the like. Filters may be parametrized by filter parameters. Usually, the compensation table and the filter parameters are determined by calibration, however, due to the high sensitivity of the measurement of sensor signals on ambient physical conditions accurate sensor signals cannot be obtained under all operating situations.

Document REHBINDER et al., "Drift-Free attitude estimation for accelerated rigid bodies", PROCEEDINGS OF THE 2001 IEEE INTERNATIONAL CONFERENCE ON ROBOTICS AND AUTOMATION, ICRA 2001. SEOUL, KOREA, MAY 21 - 26, 2001 discloses a method for data fusion of accelerometer and gyroscope data for systems with fast changes in accelerations. The goal is to achieve long-term drift-free motion estimation. This involves creating equations of state of the system for low and high accelerations and creating a mixed model that combines the model equations for the high and low accelerations.

Document Odry Akos et al., " A Novel Fuzzy-Adaptive Extended Kalman Filter for Real-Time Attitude Estimation of Mobile Robots", Sensors vol. 20 , no. 3, February 2020 (D5) discloses the use of a Kalman filter for the real-time attitude estimation of agile mobile platforms.

Patent application DE 10 2007 055639 A1 discloses a device for determining a current vehicle state, having a plurality of sensor units for detecting movement signals, and an evaluation and control unit which evaluates the detected movement signals for determining the current vehicle state and forwards the determined vehicle state to a subsequent vehicle system, wherein the evaluation and control unit is designed as a neural network having a filter device for feature generation and a feature evaluation device, wherein the evaluation and control unit evaluates and combines the output signals of the sensor units for determining corresponding movement variables which represent the current vehicle state, wherein the plurality of sensor units each comprise at least two identically constructed sensors, which detect identical movement signals.

It is an object of the present invention to provide an improved inertial measurement unit which allows obtaining accurate measurement results even under variable operating conditions.

### Summary of the invention

This object has been achieved by the inertial measurement unit with adaptive filtering according to claim 1, by the method for operating an inertial measurement unit, by a training method for a filter parameter model to be applied in the inertial measurement unit according to the further independent claims.

Further embodiments are indicated in the depending sub-claims.

According to a first aspect an inertial measurement unit is provided according to claim 1.

Furthermore, the sensor unit may further comprise one or more operating sensor elements, which particularly include at least one of a temperature sensor, an ambient pressure sensor, a mechanical stress sensor, a magnetic sensor, and an electromagnetic field sensor, wherein the one or more operating sensor elements provide at least one operating parameter; wherein the filter parameter unit is configured to receive the at least one operating parameter and to provide filter parameters depending on the at least one operating parameter.

It may be provided that the filter unit is continuously operated in succeeding time steps.

According to the above inertial measurement unit (IMU), a dynamic online filter parameter adaptation is made using a data-driven filter parameter model. Substantially, the IMU comprises a sensing unit with one or more sensing elements, such as motion sensors, e.g., accelerometers, gyroscopes, and the like, and a preprocessing unit including a filter unit with one or more filter elements appropriate to be applied to sensor data which originate from the one or more sensing elements. The sensor data corresponds to digitalized (raw) sensor signals and the preprocessing unit is configured to process digitalized data.

By means of the filter parameter model, the filter unit may be permanently adapted to the operating conditions of the IMU. The filter parameter model is operated continuously and configured to provide filter parameters in response to sensor data and optionally to one or more operating conditions of the IMU.

Particularly, the filter type and/or filter parameters of each filter element may be predefined.

Furthermore, the filter parameters may include filter type selection parameters for providing a classification vector each element is associated with a respective filter element, wherein the filter output sensor data of each filter element is weighted depending on the value of the element of the classification vector wherein the output sensor data is provided as a combination of the weighted filter output sensor data, e.g. by adding.

It may be provided that the filter parameters include filter setting parameters for providing a setting for one or more of the filter elements.

So, the filter parameters include filter type selection parameters which allow selecting a filter element from a plurality of filter elements of one or more filter types to optimize the accuracy of the provided output sensor data as the output of the IMU by continuously choosing the best filter type at any time. Also, the filter parameter model may provide filter settings for one or more implemented filter elements of the filter unit. Hence, the different filter elements differ by the type of filter so that the filter elements are of different types. The filter unit implements a complementary filter and a Kalman filter.

The filter parameter model is trained to associate the filter parameters including filter type selection parameters and/or the filter settings to supplied input data. The input data may include the raw sensor data (of the actual time step) or sensor data derived thereon, such as a compensated sensor data (compensated raw sensor data for reducing misalignment errors and sensor data mismatch, such as scaling and offset, and/or derived/calculated angle/tilt information) and/or delayed (historical) (raw and/or compensated) sensor data (of one or more past time steps), and optionally operating parameters, such as an **IMU** temperature, an ambient pressure, mechanical stress, a magnetic or electromagnetic field indication.

In case, as input data, time-delayed sensor data is used, the dynamics of a motion of the IMU operation can be reflected in the filter type selection and filter settings of the filter unit.

According to a further aspect, a training method is provided according to claim 7.

Furthermore, the training of the filter parameter model may be performed by means of a predefined loss function depending on a residuum to the desired output sensor data to obtain filter setting for the filter elements, particularly on each filter element separately.

The filter parameter model can be trained online or offline on the basis of training data.

The training data can be obtained on a test bench where the inertial measurement unit is exposed to a motion according to a predefined motion profile. The corresponding raw sensor data is detected as well as optionally the operating parameters of the IMU. These are formatted to the input data format according to the configuration of the filter unit. The input data is then associated with a desired sensor data output corresponding to the motion profile applied. In other words, the desired sensor data output represents the motion of the **IMU** according to the motion profile.

The parameter model is trained based on a standard training algorithm usually based on backpropagation. In case the filter unit has multiple filter elements, the training may be performed on each of the filter elements separately to obtain optimized filter parameters for each of the filter elements under all operating conditions simulated on the test bench or using any different motion profiles.

A classification corresponding to the filter type selection output as a label for training can be obtained by determining the one respective filter element among the filter elements which outputs output sensor data which is closest to the desired sensor data output.

The loss function for training is defined by or depending on the difference between the desired sensor data output of the motion profile and the actual output sensor data.

Furthermore, after the filter settings of the filter elements have been provided, the training may be performed by means of a loss function depending on a performance of each of the filter elements on one or more training data items.

### Brief description of the drawings

Embodiments are described in more detail in conjunction with the accompanying drawings, in which:
- Figure 1: schematically shows an inertial measurement unit according to embodiments of the present invention;
- Figure 2: shows a functional diagram of a parameter model for a filter unit of the inertial measurement unit according to Figure 1;
- Figure 3: shows a flowchart for illustrating a method for training a data-driven filter parameter model.

### Description of embodiments

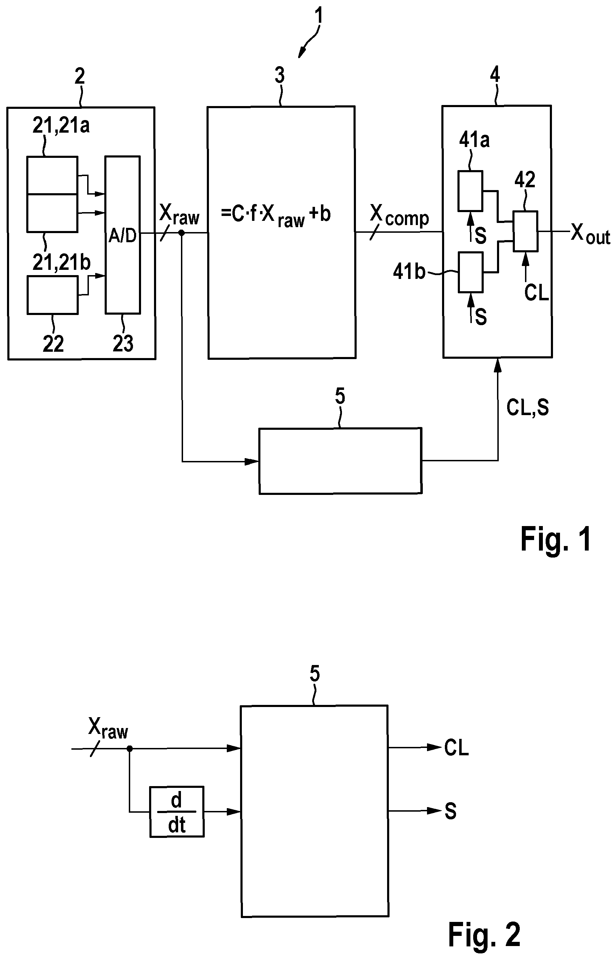

Figure 1 schematically shows an inertial measurement unit 1 including a sensor unit 2 comprising one or more sensor elements 21. The sensor elements 21 substantially may be formed as motion sensors, such as accelerometers 21a, gyroscopes 21b, or the like. Also, for example, the accelerometers 21a comprise a 3-axis accelerometer that measures the acceleration or rate of change of the velocity along the X, Y, and Z axes of the **IMU 1.**

The motion sensors 21a, 21b can be formed with a spring-biased inertial mass which is moveable under the impact of force exertion. The movement of the inertial mass can be detected using a physical effect. For example, a capacitance change can be measured which depends on the quantity of the applied force. The measurement may provide a voltage signal. Other physical effects for measuring forces caused by the inertia of masses can be applied as well.

Furthermore, operating sensor elements 22, which are non-motion sensors, can be included in sensor unit 2 to detect the operating conditions of the **IMU** 1. The operating sensors may include one or more of a temperature sensor, an ambient pressure sensor, a mechanical stress sensor (for measuring strain), a magnetic/electromagnetic field sensor (e.g. for measuring the magnetic field of earth), or the like.

By means of an analog-digital converter 23 those sensor signals from sensors 21a, 21b, and 22 which are provided as analog signals, are sampled and digitalized to provide all sensor signals as raw sensor data in consecutive time steps at an output of the sensor unit 2. In the operation of the **IMU,** the raw sensor data X_{raw} is supplied as a data stream with a sampling rate that can be in the range of low frequencies up to some kHz.

The raw sensor data X_{raw} may be supplied to a compensation unit 3 in which a precalibrated compensation of the raw sensor data X_{raw} is performed. The compensation may be performed according to a calibrated compensation table which includes scale factors f, bias values b for each of the sensor elements 21a, 21b, and a misalignment matrix C for correcting misalignments of the sensor elements 21a, 21b which allow for compensating of systematic sensor errors. Particularly, a compensated sensor data X_{comp} may e.g. be obtained as X_{comp} =C*f* X_{raw} +b.

The compensated sensor data X_{comp} may be then supplied to a filter unit 4 which includes one or more filters 41a, 41b to filter the compensated sensor data X_{comp}. In other embodiments, the raw sensor data X_{raw} may be directly supplied to the filter unit 4 where no compensation of sensor data shall be made.

Filter unit 4 includes a complementary filter 41a and a Kalman filter 41b as specific filter elements. According to embodiments not covered by the claims, other filter types can be used as well. Also, according to embodiments not covered by the claims, filter elements of only one filter type can be applied each having a different parametrization.

The outputs of the filter elements 41a, 41b are selected according to a filter type selection parameter and forwarded to the output of the IMU 1 as output sensor data. According to embodiments not covered by the claims, the outputs of the filter elements 41a, 41b can be combined, e.g., in a combiner 42, in the form of a weighted sum according to weights provided as explained below. The output of the filter unit 4 corresponds to the output of the inertial measurement unit 1 as output sensor data.

Furthermore, a filter parameter unit 5 is provided which includes a data-driven filter parameter model. The filter parameter model may be implemented in hardware and/or software. The filter parameter unit 5 receives as model inputs raw sensor data X_{raw} including data from the motion sensors 21a, 21b, and optionally from the operating sensors 22, and outputs as model output associated filter parameters CL, S to configure/operate the filter unit 4.

As shown in Figure 2, the input data provided to the filter parameter unit 5 include the raw sensor data X_{raw} including the inertia values of linear and/or angular acceleration and/or angular velocities, and operating parameters such as the temperature of the inertial measurement unit 1 as well as the measurement of further operating conditions, such as ambient pressure, mechanical stress, magnetic/electromagnetic field exposure, or the like.

Furthermore, as input data, delayed raw sensor data (delayed by one or more samples/time steps ) can be used to obtain a type of NARX architecture. Also, raw sensor data items can be provided with different delays as input data for the filter parameter unit 5.

The filter parameter unit 5 provides an output which can include a classification vector CL representing a filter type selection parameter. The classification vector may include an element associated with the complementary filter 41a and an element associated with the Kalman filter 41b. A filter type selection parameter may be generated depending on which value of both elements is higher to select the filter element 41a, 41b associated with the respective element. Depending on the filter type selection parameter a filter element 41a, 41b of the specific filter type is selected so that only the filter output of the selected filter element 41a, 41b is conveyed to the output of the IMU 1.

It may be provided that the output of the filter element 41a, 41b which was not selected can also be read out if required.

Furthermore, the output of the filter parameter unit 5 may be settings S for the complementary filter 41a and the Kalman filter 41b so that the filter properties are configured for each of the filter elements 41a, 41b.

According to embodiments not covered by the claims, as an alternative to the above selection of the filter elements, both filter elements 41a, 41b can be applied to the compensated sensor data X_{comp} where the two so filtered sensor data are combined by weighting according to the normalized values of the elements of the classification vector CL associated with the respective filter element 41a, 41b and by adding the weighted filter element outputs to obtain the output sensor data Xₒᵤₜ.

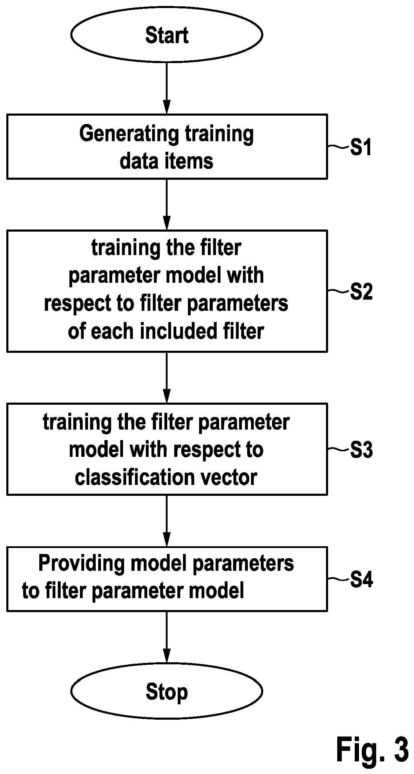

Figure 3 shows a flowchart specifying method steps for training the data-driven filter parameter model. The filter parameter model may be formed as an (optional trainable) deep neural network with input data and output data as exemplarily described in conjunction with Figure 2.

The filter parameter model has to be trained by training data which can be obtained in step S1 by means of a test bench or the like. The test bench is configured to provide predefined motions according to a motion profile. Training data items are obtained by retrieving raw sensor data X_{raw} from the IMU 1 while motion is applied to the inertial measurement unit 1. The training data items may each include input data e.g. according to the above-described format associated with the desired output sensor data item Xₒᵤₜ which reflects the motion according to the motion profile (by which the IMU has been excited or moved).

The training process starts in step S2. The training is performed according to standard training processes for data-driven models, such as using backpropagation or the like, using a loss function evaluating the difference between the desired output sensor data and modeled output sensor data obtained by applying the raw sensor data to the compensation unit 3 (optional) and the filter unit 4 for the same motion profile (on the residuum). The training process may be firstly applied for each implemented filter element 41a, 41b separately to optimize the performance for each filter element 41a, 41b by adapting the settings according to the operating conditions. Alternatively, the filter parameters of the filters 41a, 41b of the filter unit 4 may be preset and no training is required in step S2.

After the filter elements 41a, 41b has been trained based on the training data items (or alternatively preset) further training to obtain the classification vector CL can be performed in step S3. Here, the loss function evaluates the performance of each filter element 41a, 41b on different inputs or different sets of inputs. In detail, from the training data items the input data items can be used with each filter element 41a, 41b separately, and the element which is associated with the respective filter element 41a, 41b and which performs better with respect to the desired sensor data output is associated with a high (first) value while the other is/are associated with a low (second) value. This is generally known as One-hot-coding. The loss function for the classification vector CL is defined by the difference from the one-hot coded classification vector.

To better evaluate the performance of each filter element 41a, 41b the input data may include a time series of raw sensor data X_{raw} while the actual sensor data output of the evaluated filter element 41a, 41b with the last sample of the time series of the raw sensor data X_{raw} against the desired sensor data output.

After the training process of step S3 has been completed, the filter parameter model can be used in the **IMU** 1. Due to the high processing load of the training processes, the training may be performed external to the **IMU 1.**

The obtained model parameters of the filter parameter model are transferred in step S4 into the **IMU** 1 to be used for inference of the filter parameters by the filter parameter unit 5.

## Claims

1. Inertial measurement unit (1) for providing output sensor data according to a force or motion applied on the inertial measurement unit (1), comprising:
- a sensor unit (2) including one or more sensor elements (21) which is configured to detect motion and to provide sensor data depending on the detected motion, wherein the sensor data corresponds to digitalized raw sensor signals;
- a preprocessing unit including a filter unit (4) comprising multiple filter elements (41a, 41b) wherein the filter unit (4) is configured to apply one filter element (41a, 41b) on the sensor data according to filter parameters;
- a filter parameter unit (5) including a data-driven filter parameter model comprising a deep neural network or a convolutional neural network, which is configured to provide filter parameters to the filter unit (4) in response to the sensor data obtained from the sensor elements (21), **characterized in that** the filter parameters include filter type selection parameters (S) for selecting one of the multiple filter elements (41a, 41b) of the filter unit (4) so that only the selected filter element (41a, 41b) provides the output sensor data, wherein the filter unit (4) comprises as filter elements a complementary filter (41a) and a Kalman filter (41b).

2. Inertial measurement unit (1) according to claim 1, wherein the sensor unit (2) further comprises one or more operating sensor elements (22), which particularly include at least one of a temperature sensor, an ambient pressure sensor, a mechanical stress sensor, a magnetic sensor, and an electromagnetic field sensor, wherein the one or more operating sensor elements (22) provide at least one operating parameter; wherein the filter parameter unit (5) is configured to receive the at least one operating parameter and to provide filter parameters depending on the at least one operating parameter.

3. Inertial measurement unit (1) according to any of the claims 1 to 2, wherein the filter unit (4) is continuously operated in succeeding time steps.

4. Inertial measurement unit (1) according to claim 3, wherein the sensor data applied on the filter parameter unit (5) includes actual values of the sensor data for each of the one or more sensor elements (21) and at least one delayed value of the sensor data.

5. Inertial measurement unit (1) according to any of the claims 1 to 4, wherein the filter parameters of each filter element (41a, 41b) are predefined.

6. Inertial measurement unit (1) according to any of the claims 1 to 4, wherein the filter parameters include setting parameters for providing a setting for each filter element (41a, 41b).

7. Training method for training a data-driven filter parameter model, to be applied in the filter parameter unit (5) of the inertial measurement unit (1) according to any of the claims 1 to 6, wherein the filter parameter model is trained using training data items, wherein each training data item associates an input data item comprising at least one raw sensor data item to a desired output sensor data of a predefined motion according to a motion profile, wherein the raw sensor data (X_{raw}) is obtained by moving the inertial measurement unit (1) according to the motion profile and recording the raw sensor data (X_{raw}).

8. Training method according to claim 7 wherein the training is performed by means of a loss function depending on a residuum to the desired output sensor data to obtain filter setting for the filter elements (41a, 41b), particularly on each filter element (41a, 41b) separately.

9. Training method according to claim 7 or 8 wherein after the filter settings of the filter elements (41a, 41b) have been provided, the training is performed by means of a loss function depending on a performance of each of the filter elements (41a, 41b) on one or more training data items:

## Patentansprüche

1. Inertiale Messeinheit (1) zum Bereitstellen von Ausgangssensordaten entsprechend einer auf die inertiale Messeinheit (1) ausgeübten Kraft oder Bewegung, umfassend:
- eine Sensoreinheit (2), die ein oder mehrere Sensorelemente (21) aufweist und die dazu ausgebildet ist, eine Bewegung zu erfassen und Sensordaten in Abhängigkeit von der erfassten Bewegung bereitzustellen, wobei die Sensordaten digitalisierten Rohsensorsignalen entsprechen;
- eine Vorverarbeitungseinheit, die eine Filtereinheit (4) aufweist, welche mehrere Filterelemente (41a, 41b) umfasst, wobei die Filtereinheit (4) dazu ausgebildet ist, ein Filterelement (41a, 41b) gemäß Filterparametern auf die Sensordaten anzuwenden;
- eine Filterparametereinheit (5), die ein datengetriebenes Filterparametermodell aufweist, welches ein tiefes neuronales Netz oder ein faltendes neuronales Netz umfasst, und die dazu ausgebildet ist, der Filtereinheit (4) in Reaktion auf die von den Sensorelementen (21) erhaltenen Sensordaten Filterparameter bereitzustellen, **dadurch gekennzeichnet, dass** die Filterparameter Filtertyp-Auswahlparameter (S) zum Auswählen eines der mehreren Filterelemente (41a, 41b) der Filtereinheit (4) umfassen, sodass nur das ausgewählte Filterelement (41a, 41b) die Ausgangssensordaten bereitstellt, wobei die Filtereinheit (4) als Filterelemente ein Komplementärfilter (41a) und ein Kalman-Filter (41b) umfasst.

2. Inertiale Messeinheit (1) nach Anspruch 1, wobei die Sensoreinheit (2) ferner ein oder mehrere Betriebssensorelemente (22) umfasst, die insbesondere mindestens einen aus einem Temperatursensor, einem Umgebungsdrucksensor, einem Sensor für mechanische Spannungen, einem Magnetsensor und einem Sensor für elektromagnetische Felder umfassen, wobei das eine oder die mehreren Betriebssensorelemente (22) mindestens einen Betriebsparameter bereitstellen; wobei die Filterparametereinheit (5) dazu ausgebildet ist, den mindestens einen Betriebsparameter zu empfangen und Filterparameter in Abhängigkeit von dem mindestens einen Betriebsparameter bereitzustellen.

3. Inertiale Messeinheit (1) nach einem der Ansprüche 1 bis 2, wobei die Filtereinheit (4) fortlaufend in aufeinanderfolgenden Zeitschritten betrieben wird.

4. Inertiale Messeinheit (1) nach Anspruch 3, wobei die der Filterparametereinheit (5) zugeführten Sensordaten aktuelle Werte der Sensordaten für jedes des einen oder der mehreren Sensorelemente (21) und mindestens einen verzögerten Wert der Sensordaten umfassen.

5. Inertiale Messeinheit (1) nach einem der Ansprüche 1 bis 4, wobei die Filterparameter jedes Filterelements (41a, 41b) vorab festgelegt sind.

6. Inertiale Messeinheit (1) nach einem der Ansprüche 1 bis 4, wobei die Filterparameter Einstellparameter zum Bereitstellen einer Einstellung für jedes Filterelement (41a, 41b) umfassen.

7. Trainingsverfahren zum Trainieren eines datengetriebenen Filterparametermodells, das in der Filterparametereinheit (5) der inertialen Messeinheit (1) nach einem der Ansprüche 1 bis 6 anzuwenden ist, wobei das Filterparametermodell unter Verwendung von Trainingsdatensätzen trainiert wird, wobei jeder Trainingsdatensatz einen Eingangsdatensatz, der mindestens einen Rohsensordatensatz umfasst, gewünschten Ausgangssensordaten einer vorgegebenen Bewegung gemäß einem Bewegungsprofil zuordnet, wobei die Rohsensordaten (X_{raw}) erhalten werden, indem die inertiale Messeinheit (1) gemäß dem Bewegungsprofil bewegt wird und die Rohsensordaten (X_{raw}) aufgezeichnet werden.

8. Trainingsverfahren nach Anspruch 7, wobei das Training mittels einer Verlustfunktion, die von einem Residuum zu den gewünschten Ausgangssensordaten abhängt, durchgeführt wird, um eine Filtereinstellung für die Filterelemente (41a, 41b) zu erhalten, insbesondere an jedem Filterelement (41a, 41b) gesondert.

9. Trainingsverfahren nach Anspruch 7 oder 8, wobei, nachdem die Filtereinstellungen der Filterelemente (41a, 41b) bereitgestellt worden sind, das Training mittels einer Verlustfunktion durchgeführt wird, die von einer Leistungsfähigkeit jedes der Filterelemente (41a, 41b) bei einem oder mehreren Trainingsdatensätzen abhängt:

## Revendications

1. Unité de mesure inertielle (1) destinée à fournir des données de capteur de sortie en fonction d'une force ou d'un mouvement appliqués à l'unité de mesure inertielle (1), comprenant :
- une unité de capteur (2) comportant un ou plusieurs éléments capteurs (21), qui est configurée pour détecter un mouvement et pour fournir des données de capteur en fonction du mouvement détecté, les données de capteur correspondant à des signaux de capteur bruts numérisés ;
- une unité de prétraitement comportant une unité de filtre (4) comprenant plusieurs éléments de filtre (41a, 41b), l'unité de filtre (4) étant configurée pour appliquer un élément de filtre (41a, 41b) aux données de capteur selon des paramètres de filtre ;
- une unité de paramètres de filtre (5) comportant un modèle de paramètres de filtre piloté par les données comprenant un réseau neuronal profond ou un réseau neuronal convolutif, qui est configurée pour fournir des paramètres de filtre à l'unité de filtre (4) en réponse aux données de capteur obtenues à partir des éléments capteurs (21), **caractérisée en ce que** les paramètres de filtre comprennent des paramètres de sélection de type de filtre (S) destinés à sélectionner l'un des multiples éléments de filtre (41a, 41b) de l'unité de filtre (4), de sorte que seul l'élément de filtre (41a, 41b) sélectionné fournit les données de capteur de sortie, l'unité de filtre (4) comprenant, en tant qu'éléments de filtre, un filtre complémentaire (41a) et un filtre de Kalman (41b).

2. Unité de mesure inertielle (1) selon la revendication 1, dans laquelle l'unité de capteur (2) comprend en outre un ou plusieurs éléments capteurs de fonctionnement (22), qui comprennent notamment au moins l'un parmi un capteur de température, un capteur de pression ambiante, un capteur de contrainte mécanique, un capteur magnétique et un capteur de champ électromagnétique, dans laquelle le ou les éléments capteurs de fonctionnement (22) fournissent au moins un paramètre de fonctionnement ; dans laquelle l'unité de paramètres de filtre (5) est configurée pour recevoir ledit au moins un paramètre de fonctionnement et pour fournir des paramètres de filtre en fonction dudit au moins un paramètre de fonctionnement.

3. Unité de mesure inertielle (1) selon l'une quelconque des revendications 1 à 2, dans laquelle l'unité de filtre (4) est exploitée en continu à des pas de temps successifs.

4. Unité de mesure inertielle (1) selon la revendication 3, dans laquelle les données de capteur appliquées à l'unité de paramètres de filtre (5) comprennent des valeurs actuelles des données de capteur pour chacun du ou des éléments capteurs (21) et au moins une valeur retardée des données de capteur.

5. Unité de mesure inertielle (1) selon l'une quelconque des revendications 1 à 4, dans laquelle les paramètres de filtre de chaque élément de filtre (41a, 41b) sont prédéfinis.

6. Unité de mesure inertielle (1) selon l'une quelconque des revendications 1 à 4, dans laquelle les paramètres de filtre comprennent des paramètres de réglage destinés à fournir un réglage pour chaque élément de filtre (41a, 41b).

7. Procédé d'entraînement destiné à entraîner un modèle de paramètres de filtre piloté par les données, destiné à être appliqué dans l'unité de paramètres de filtre (5) de l'unité de mesure inertielle (1) selon l'une quelconque des revendications 1 à 6, dans lequel le modèle de paramètres de filtre est entraîné à l'aide de jeux de données d'entraînement, dans lequel chaque jeu de données d'entraînement associe un jeu de données d'entrée comprenant au moins un jeu de données de capteur brutes à des données de capteur de sortie souhaitées d'un mouvement prédéfini selon un profil de mouvement, dans lequel les données de capteur brutes (X_{raw}) sont obtenues en déplaçant l'unité de mesure inertielle (1) selon le profil de mouvement et en enregistrant les données de capteur brutes (X_{raw}).

8. Procédé d'entraînement selon la revendication 7, dans lequel l'entraînement est effectué au moyen d'une fonction de perte dépendant d'un résidu par rapport aux données de capteur de sortie souhaitées, afin d'obtenir un réglage de filtre pour les éléments de filtre (41a, 41b), notamment sur chaque élément de filtre (41a, 41b) séparément.

9. Procédé d'entraînement selon la revendication 7 ou 8, dans lequel, après que les réglages de filtre des éléments de filtre (41a, 41b) ont été fournis, l'entraînement est effectué au moyen d'une fonction de perte dépendant d'une performance de chacun des éléments de filtre (41a, 41b) sur un ou plusieurs jeux de données d'entraînement :
